# EUROPÄISCHE PATENTANMELDUNG

(11) **EP 1 279 990 A2**
(43) Veröffentlichungstag der Anmeldung: **29.01.2003**
(21) Anmeldenummer: 02010979.9
(22) Anmeldetag: 17.05.2002
(51) Int. Cl.: G02B 27/64

(54) **Ausrichtbares optisches Abbildungssystem, insbesondere für Suchköpfe bei zielverfolgenden Lenkflugkörpern**

(30) Priorität: 20.07.2001 DE 10134663
(71) Anmelder: Bodenseewerk Gerätetechnik GmbH, 88662 Überlingen (DE)
(72) Erfinder: Baumgart, Jörg, Dr.-Ing., 88682 Salem (DE)
(74) Vertreter: Weisse, Renate Dr.

(57) **Zusammenfassung**

Die Erfindung betrifft ein ausrichtbares optisches Abbildungssystem zur Erzeugung eines Bildes einer Objektszene auf einem bildauflösenden Detektor (18), insbesondere für Suchköpfe bei zielverfolgenden Lenkflugkörpern, mit einem als Weitwinkeloptik ausgebildeten ersten Systemteil (12), durch den ein Zwischenbild (40) der Objektszene erzeugt wird und einen zweiten Systemteil (14), durch den dieses Zwischenbild (40) auf den Detektor (18) abbildbar ist. Der Erfindung liegt die Aufgabe zu Grunde, einen Suchkopf mit einem strukturfesten Detektor (18) so aufzubauen, daß ein großer Sichtbereich mit hoher Auflösung erfaßt werden kann, daß mit einem kleinen Fenster ein großer Sichtbereich erfaßt werden kann und daß er mit geringer Trägheit einer sich im Sichtbereich bewegenden Objektszene, z.B. einem zu verfolgenden Ziel, zu folgen vermag. Nach der Erfindung wird durch den ersten Systemteil (12) des Abbildungssystems (10) ein Zwischenbild (20) des erfaßbaren Sichtbereichs erzeugt. Dieses Zwischenbild (20) enthält auch die zu beobachtende Objektszene. Der zweite Systemteil (14) erzeugt nun ein Bild eines Teils (40) dieses ausgedehnten Zwischenbildes (20) auf dem bildauflösenden Detektor (18), z.B. einem Matrixdetektor mit einer zweidimensionalen Anordnung von Detektorelementen. Der Detektor (18) braucht nun nur diesen Teil (40) des Zwischenbildes (20) in Pixel aufzulösen, nicht das gesamte Zwischenbild. (20) Damit ergibt sich eine hohe Auflösung für diesen Teil des Zwischenbildes. Der Sucher kann nun auf einen bestimmten Teil des erfaßbaren Sichtbereichs ausgerichtet werden. Diese Ausrichtung erfolgt aber nicht durch Verschwenken des ganzen Suchers sondern durch eine translatorische Verschiebung des zweiten Systemteils (14) des Abbildungssystems (10). Durch diese Verschiebung wird erreicht, daß der Detektor (18) einen anderen Teil des Zwischenbildes erfaßt und auflöst.

Durch die Verschiebung kann der Sucher auf eine zu beobachtende Objektszene ausgerichtet werden, z.B. auf ein zu verfolgendes Ziel.

## Beschreibung

Die Erfindung betrifft ein ausrichtbares optisches Abbildungssystem zur Erzeugung eines Bildes einer Objektszene auf einem bildauflösenden Detektor, insbesondere für Suchköpfe bei zielverfolgenden Lenkflugkörpern, mit einem ersten Systemteil, durch den ein Zwischenbild der Objektszene erzeugt wird und einen zweiten Systemteil, durch den dieses Zwischenbild auf den Detektor abbildbar ist.

Bei bekannten Suchköpfen ist ein optisches Abbildungssystem mit einem bildauflösenden Detektor kardanisch gelagert. Das Abbildungssystem wird durch eine Schwenkbewegung auf eine zu beobachtende Objektszene, z.B. ein zu verfolgendes Ziel, ausgerichtet. Der Detektor erfaßt dann einen begrenzten, die zu beobachtende Objektszene enthaltenden Raumwinkel. In diesem begrenzten Raumwinkel wird die Objektszene mit dem Auflösungsvermögen des Detektors in Pixel aufgelöst. Der von Abbildungsoptik und Detektor gebildete Sucher sitzt hinter einem Fenster z.B. in der Spitze eines Lenkflugkörpers. Bei Lenkflugkörpem ist der Sucher kreiselstabilisiert, also durch Kreisel von den Bewegungen des Lenkflugkörpers entkoppelt.

Diese bekannte Anordnung hat verschiedene Nachteile: Es ist ein relativ großes Fenster erforderlich. Der Sucher muß kardanisch gelagert werden. Das ist aufwendig. Außerdem ist die Anordnung durch das Trägheitsmoment des Suchers, der Kardanrahmen und der für die Nachführung erforderlichen Stellmotoren ziemlich träge. Signal- und Kühlmittelleitungen müssen zu dem schwenkbar gelagerten Detektor geführt werden.

Es sind weiterhin Suchköpfe mit strukturfesten Suchern bekannt. Hier ergibt sich das Problem, daß einerseits ein möglichst großes Gesichtsfeld erfaßbar sein soll, entsprechend dem Gesichtsfeld, das durch die Schwenkbewegung des Suchers bei einem kardanisch gelagerten Sucher überstrichen werden kann, daß aber andererseits eine möglichst hohe Auflösung erreicht werden soll. Die Auflösung wird begrenzt durch die Anzahl der Detektorelemente des bildauflösenden Detektors.

Es sind schließlich auch bei Suchköpfen Abbildungssysteme mit Zwischenabbildung bekannt.

Der Erfindung liegt die Aufgabe zu Grunde, einen Suchkopf mit einem strukturfesten Detektor so aufzubauen, daß ein großer Sichtbereich mit hoher Auflösung erfaßt werden kann.

Der Erfindung liegt weiter die Aufgabe zu Grunde, einen Suchkopf so aufzubauen, daß mit einem kleinen Fenster ein großer Sichtbereich erfaßt werden kann.

Der Erfindung liegt schließlich die Aufgabe zu Grunde, einen Suchkopf so aufzubauen, daß er mit geringer Trägheit einer sich im Sichtbereich bewegenden Objektszene, z.B. einem zu verfolgenden Ziel, zu folgen vermag.

Erfindungsgemäß werden diese Aufgaben dadurch gelöst, daß der zweite Systemteil zum Ausrichten des optischen Abbildungssystems auf die Objektszene translatorisch quer zur optischen Achse des Abbildungssystems verstellbar ist.

Nach der Erfindung wird durch den ersten Systemteil des Abbildungssystems ein Zwischenbild des erfaßbaren Sichtbereichs erzeugt. Dieses Zwischenbild enthält auch die zu beobachtende Objektszene. Der zweite Systemteil erzeugt nun ein Bild eines Teils dieses ausgedehnten Zwischenbildes auf dem bildauflösenden Detektor, z.B. einem Matrixdetektor mit einer zweidimensionalen Anordnung von Detektorelementen. Der Detektor braucht nun nur diesen Teil des Zwischenbildes in Pixel aufzulösen, nicht das gesamte Zwischenbild. Damit ergibt sich eine hohe Auflösung für diesen Teil des Zwischenbildes. Der Sucher kann nun auf einen bestimmten Teil des erfaßbaren Sichtbereichs ausgerichtet werden. Diese Ausrichtung erfolgt aber nicht durch Verschwenken des ganzen Suchers sondern durch eine translatorische Verschiebung des zweiten Systemteils des Abbildungssystems. Durch diese Verschiebung wird erreicht, daß der Detektor einen anderen Teil des Zwischenbildes erfaßt und auflöst. Durch die Verschiebung kann der Sucher auf eine zu beobachtende Objektszene ausgerichtet werden, z.B. auf ein zu verfolgendes Ziel.

Durch diese Anordnung ergeben sich wesentliche Vorteile: Die Größe des Fensters kann praktisch auf die Eintrittsapertur des Abbildungssystems begrenzt werden. Es ist keine aufwendige kardanische Lagerung erforderlich. Beweglich ist nur der zweite Systemteil des Abbildungssystems. Damit wird die zu bewegende Masse klein und die Trägheit verringert. Die Bewegung erfolgt translatorisch. Durch geeignete Auslegung des Abbildungssystems kann die erforderliche translatorische Bewegung klein gehalten werden. Der Detektor ist strukturfest. Damit ergeben sich keine Probleme mit der Zufuhr von Kühlmittel und dem Abgriff von Signalen. Die Auflösung ist hoch, da der strukturfeste Detektor nur einen interessierenden Teil des gesamten Sichtbereichs mit der zu beobachtenden Objektszene aufzulösen braucht.

Um einen großen Sichtbereich erfassen zu können, ist es vorteilhaft, wenn der erste Systemteil eine Weitwinkeloptik ist.

Ein Ausführungsbeispiel der Erfindung ist nachstehend unter Bezugnahme auf die zugehörigen Zeichnungen näher erläutert.
- Fig.1: veranschaulicht schematisch den Strahlengang mit einer ersten lateralen Position des zweiten Systemteils.
- Fig.2: veranschaulicht schematisch den Strahlengang mit einer zweiten lateralen Position des zweiten Systemteils.
- Fig.3: zeigt schematisch den erfaßbaren Sichtbereich, wie er von dem ersten Systemteil des Abbildungssystems als Zwischenbild abgebildet wird mit einem von dem Detektor erfaßten Teilbereich.
- Fig.4: zeigt schematisch den zweiten Systemteil mit translatorischen Stellmitteln.

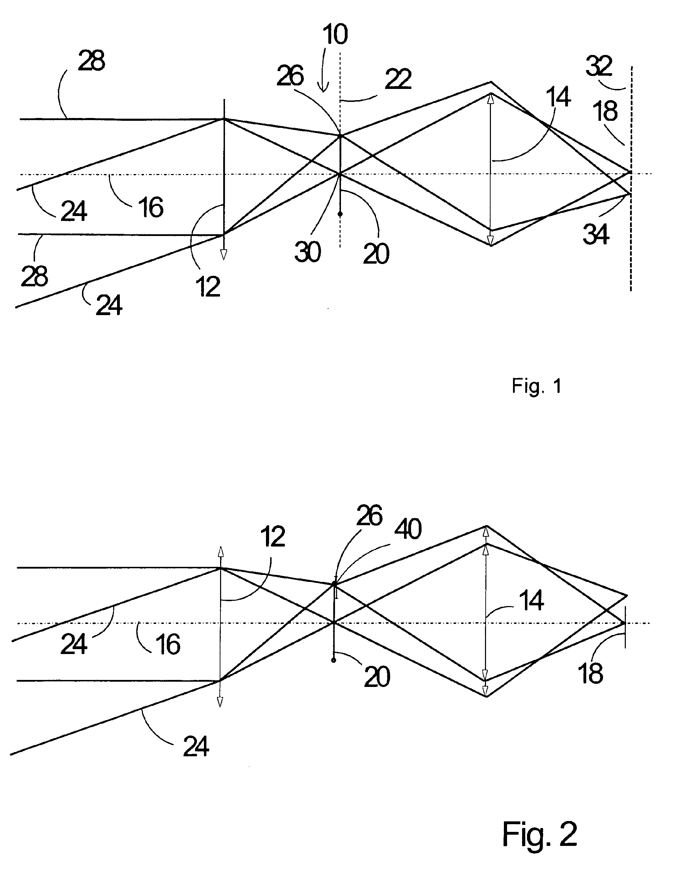

In Fig. 1 ist mit 10 generell ein optisches Abbildungssystem bezeichnet. Das Abbildungssystem 10 besteht aus einem als Weitwinkeloptik ausgebildeten ersten Systemteil 12 und einem zweiten Systemteil 14. Die beiden Systemteile 12 und 14 des Abbildungssystems 10 sind schematisch als Linsen durch Doppelpfeile dargestellt. Mit 16 ist die optische Achse des ersten Systemteils 12 bezeichnet. Auf dieser optischen Achse 16 sitzt hinter dem zweiten Systemteil 14 ein strukturfester, bildauflösender Detektor 18. Der Detektor 18 besteht in bekannter Weise aus einer zweidimensionalen Anordnung von Detektorelementen. Jedes Detektorelement liefert ein Bildelement (Pixel) eines Bildes einer beobachteten Objektszene.

Der erste Systemteil 12 erzeugt von einem beobachtbaren Sichtbereich ein Zwischenbild 20 in einer Zwischenbildebene 22. Ein im Unendlichen in Richtung der parallelen, mit der optischen Achse 16 einen Winkel einschließenden Strahlen 24 liegender Punkt des Sichtbereichs wird in einem Punkt 26 der Zwischenbildebene 22 abgebildet. Ein im Unendlichen auf der optischen Achse 16 liegender Punkt wird durch die parallel einfallenden Strahlen 28 in einem auf der optischen Achse 16 liegenden Punkt 30 der Zwischenbildebene abgebildet.

In Fig. 1 ist der zweite Systemteil 14 gleichachsig zu dem ersten Systemteil 12 angeordnet. Der Detektor 18 ist in der Bildebene 32 des Abbildungssystems 10 angeordnet. Der zweite Systemteil 14 bildet daher in Fig.1 einen symmetrisch zu der optischen Achse 16 liegenden Bereich des Zwischenbildes 20 auf dem auf der optischen Achse angeordneten Detektor 18 ab. Der durch die Strahlen 24 erzeugte Punkt 26 des Zwischenbildes 20 wird dagegen durch den zweiten Systemteil im Punkt 34 neben dem Detektor 18 abgebildet.

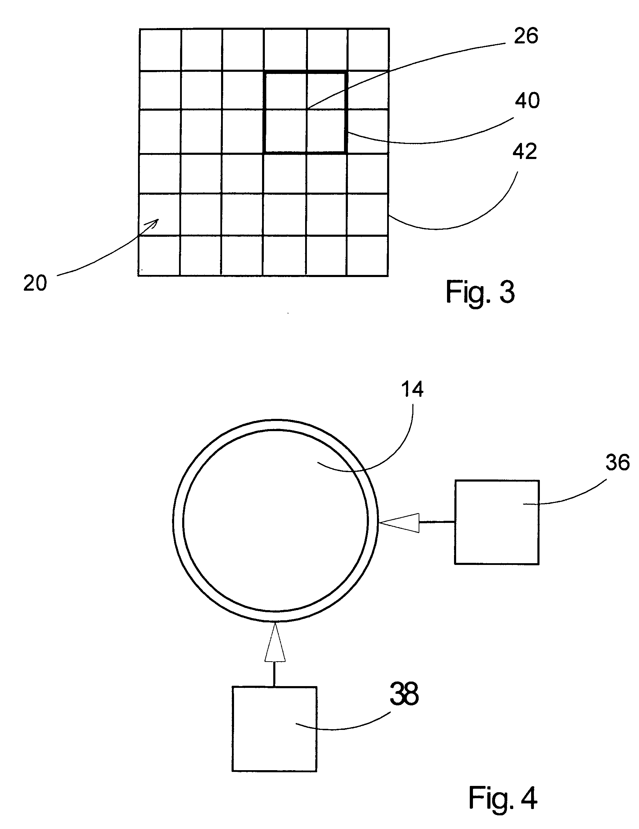

In Fig.2 ist der zweite Systemteil 14 gegenüber der optischen Achse 16 nach oben in Fig.2 translatorisch quer zur optischen Achse 16 verschoben. Die Position von Fig.1 ist in Fig.2 durch nicht ausgefüllte Pfeilspitzen angedeutet. Die Verstellung kann durch translatorische Stellmittel 36 und 38 in zwei zueinander senkrechten Richtungen erfolgen, wie in Fig.4 angedeutet ist. Bei dieser Position des zweiten Systemteils 14 bildet der zweite Systemteil den seitlichen Punkt 26 des Zwischenbildes 20 und den diesen umgebenden, eine beobachtete Objektszene darstellenden Teil 40 des gesamten Sichtbereichs 42 auf der optischen Achse 16 ab. Der Detektor 18 erfaßt jetzt einen Teil des Zwischenbildes 20, welcher durch die Strahlen 24 und deren benachbarte Strahlen erzeugt wird. Der Sucher "blickt" daher in Richtung der Strahlen 24.

## Patentansprüche

1. Ausrichtbares optisches Abbildungssystem zur Erzeugung eines Bildes einer Objektszene auf einem Detektor (18), insbesondere für Suchköpfe bei zielverfolgenden Lenkflugkörpern, mit einem ersten Systemteil (12), durch den ein Zwischenbild (40) der Objektszene erzeugt wird und einen zweiten Systemteil (14), durch den dieses Zwischenbild (40) auf den Detektor (18) abbildbar ist, **dadurch gekennzeichnet, daß** der zweite Systemteil (14) zum Ausrichten des optischen Abbildungssystems (10) auf die Objektszene translatorisch quer zur optischen Achse (16) des Abbildungssystems (10) verstellbar ist.

2. Abbildungssystem nach Anspruch 1, **dadurch gekennzeichnet, daß** der erste Systemteil (12) eine Weitwinkeloptik ist.
